# EUROPEAN PATENT SPECIFICATION

(11) **EP 1 793 989 B1**
(45) Date of publication and mention of the grant of the patent: **18.04.2012**
(21) Application number: 05810521.4
(22) Date of filing: 23.09.2005
(51) Int. Cl.: B32B 7/02, B32B 27/32, B29C 70/34, B32B 5/12, B32B 5/26, C08J 5/24

(54) **THIN PLY LAMINATES**
DÜNNE SCHICHTLAMINATE
LAMINES A PLIS MINCES

(30) Priority: 24.09.2004 US 612740 P; 04.04.2005 US 668341 P
(43) Date of publication of application: 13.06.2007
(73) Proprietor: ITOCHU CORPORATION, Minato-ku, Tokyo 107-8077 (JP); ILT Corporation, Palo Alto CA 94301 (US); Mitsuya Co., Ltd., Fukui City, Fukui Prefecture 910-0108 (JP); Fukui Prefectural Government, Fukui-shi, Fukui Prefecture 910-0580 (JP)
(72) Inventor: TSAI, Stephen W., Palo Alto, CA 94301 (US); KAWABE, Kazumasa, Fukui City Fukui Prefecture 910-0102 (JP)
(74) Representative: Flint, Adam
(86) International application number: PCT/US2005/034961
(87) International publication number: WO 2006/037083

(56) References cited:
- EP-A1- 0 312 150
- WO-A1-01/28780
- US-A- 3 895 084
- US-A- 4 790 898
- US-A- 5 171 419
- US-A- 6 032 342
- WEBER M F ET AL: "GIANT BIREFRINGENT OPTICS IN MULTILAYER POLYMER MIRRORS" SCIENCE, AMERICAN ASSOCIATION FOR THE ADVANCEMENT OF SCIENCE, WASHINGTON, DC; US LNKD- DOI:10.1126/SCIENCE.287.5462.2451, vol. 287, no. 5462, 31 March 2000 (2000-03-31), pages 2451-2456, XP000990141 ISSN: 0036-8075
- SIHN ET AL: "Experimental studies of thin-ply laminated composites" COMPOSITES SCIENCE AND TECHNOLOGY, ELSEVIER, UK LNKD- DOI:10.1016/J.COMPSCITECH.2006.06.008, vol. 67, no. 6, 31 January 2007 (2007-01-31), pages 996-1008, XP005867728 ISSN: 0266-3538
- STEPHEN W TSAI: "Rules of composites design: a review" INTERNATIONAL CONFERENCE ON COMPOSITE MATERIALS : ICCM,, vol. 9, 1 January 1993 (1993-01-01), pages 113-118, XP009135179
- "Fabrics and Preforms" In: D B MIRACLE & S L DONALDSON: "ASM Handbook, Volume 21 Composites" 1 December 2001 (2001-12-01), ASM , Materials Park, OH 44073-0002 USA , XP002588571 ISBN: 0-87170-703-9 , pages 59-68 * the whole document *

## Description

### BACKGROUND OF THE INVENTION

### Field of the Invention

The present invention relates generally to fiber composite materials, and more particularly to composite materials using thin plies to achieve improved physical properties and the methods of manufacture of such materials.

### Description of the Prior Art

Conventional composite plies, with or without impregnated resin, are at least 0.12 mm thick. Laminates of composite plies are formed by stacking unidirectional plies together followed by some consolidation and curing process. Plies having different orientations are needed to provide mechanical properties in more than on direction. Thus, as a minimum two ply orientations are needed such as one ply oriented at a reference 0° angle and another at 90°. Ply layer orientations will be described in the following using the notation [0/90] or [+45/-45] for example for one ply at 0° and another laminated onto the first at 90° or one at +45° laminated to another at -45°, indicating relative orientation in degrees to an axis. In addition, laminates must be symmetrically stacked in order to avoid warping. Thus, in the prior art a minimum of 3 plies like [0/90/0] or 4 plies like [0/90/90/0] have a minimum total (gauge) thickness of 0.36 or 0.48 mm, whether this thickness is needed or not singe each layer is at least 0.12 mm. It is a common practice to have 4 ply orientations of [0/90/45/-45]. When this is made symmetrical, 8 plies are needed and the minimum total laminate thickness is approximately 8 x 0.12 mm, or about 1 mm using conventional plies of at least 0.12 mm.

Delamination often occurs at free edges of a laminate, or at a point where a concentrated bearing load is applied, or at a point subjected to a transverse impact, or a stress formed during curing of the laminate. Regardless of its origin, delamination is a failure mode that often limits the realization of the full potential of the critical in-plane loading carrying capability of a multi-directional laminate. As composites are being utilized for more and more primary structures, like the Boeing 787 and Airbus 350 and 380 aircraft, composite components can be hundreds of plies thick. Delamination is a serious threat to the acceptance of composites for many applications.

One popular solution is to form a laminate as a 3-dimensional woven fabric. There are many versions of this weaving technique. There are at least two drawbacks: the cost can be an order of magnitude higher, and the in-plane properties are reduced to make room for the out-of-plane fibers. An alternative to this solution is to use transverse stitching. This approach is not only costly but also has dubious value. Stitching causes additional damage to the composite laminate.

According to the present invention, there is provided a composite material comprising at least a first layer of carbon fibre thin plies and a second adjacent layer of carbon fibre thin plies, the carbon fibre thin plies having a thickness from 0.02 to 0.06 mm, wherein the carbon fibre thin plies in the first layer are oriented in a first direction and the carbon fibre thin plies in the second layer are oriented in a second direction at an angle to the first direction wherein the material includes a combination of conventional plies having a thickness of at least 0.12 mm, and thin plies having a thickness of from 0.02 to 0.06 mm.

These combinations provide an improved resistance to micro-cracking and delamination, thinner minimum gauge for laminates, opportunities of hybridization of thick and thin plies, reinforcement of bonded joints, interlaced product with performance higher than conventional woven fabrics, improved online consolidation for piping and vessels, and chopped fibers to form stronger sheet molding compounds. Multiple ply-orientation sublaminates (referred to below as "sublaminate modules") can be formed as a basic building block for composite laminates, reducing assembly cost while maintaining high resistance to delamination. With or without automation, products from thin ply ) sublaminates and laminates can be competitive in cost with those constructed from conventional thick ply laminates.

Using a known tow spreading process, conventional 12k tows of carbon, glass or Kevlar fibers (approx. 0.12 mm thick) can be spread to form a ribbon as thin as 0.02 mm thick. With such thin plies, for example, a 3 ply orientation symmetric sublaminate according to the present invention can have the same 0.12 mm thickness as a 5 conventional 0.12 mm ply. Minimum gauge is reduced to as low as one-sixth (1/6) of the thickness of conventional ply. In a symmetrical 4-ply laminate, the minimum gauge would be 0.16 mm. Such thin gauge modules provide design options not available with conventional thick plies, and have much higher resistance to delamination. In fact, many designs of conventional composite structures are dictated by this delamination criterion. Thus higher performance or lighter weight structures can be effectively designed using thin ply laminates.

### BRIEF DESCRIPTION OF THE DRAWING

Fig. 1 illustrates the thin ply laminate of the present invention;

Fig. 2 illustrates the thicker ply of the prior art;

Fig. 3 is a graph of normal stress as a function of ply thickness;

Fig. 4 is a graph of sheer stress as a function of ply thickness;

Fig. 5 is a graph of delamination onset stress as a function of ply thickness;

Fig. 6A illustrates use of thick and thin plies;

Fig. 6B illustrates a sublaminate;

Fig. 7A is a perspective view of a composite material using sublaminates;

Fig. 7B is a side view of a composite material using sublaminates to show joints;

Fig. 8A is a graph of stiffness as a function of ply thickness;

Fig. 8B is a graph of max stress as a function of ply thickness;

Fig. 9 illustrates dry thin ply;

Fig. 10 shows a resin impregnated thin ply sheet;

Fig 11 shows a three-layer laminate;

Fig. 12 illustrates ply weaving and angle in a crimp exchange area;

Fig. 13A is a graph of load deformation versus ply thickness for various temperatures for a brittle adhesive;

Fig. 13B is a graph of load deformation versus ply thickness for various temperatures for a ductile adhesive;

Fig 14 illustrates using thin ply to join two layers;

Fig. 15 is a table illustrating the effectiveness of the joint of fig. 14;

Fig. 16 shows use of a metal foil on one side of a laminate;

Fig. 17 shows metal foil on both sides of a laminate;

Fig 18A shows metal foil on both sides and the center of a laminate;

Fig. 18B is an enlarged section from Fig. 18A; and

Fig. 19 shows layer construction in the center of the laminate without a foil.

### DETAILED DESCRIPTION OF THE EMBODIMENTS

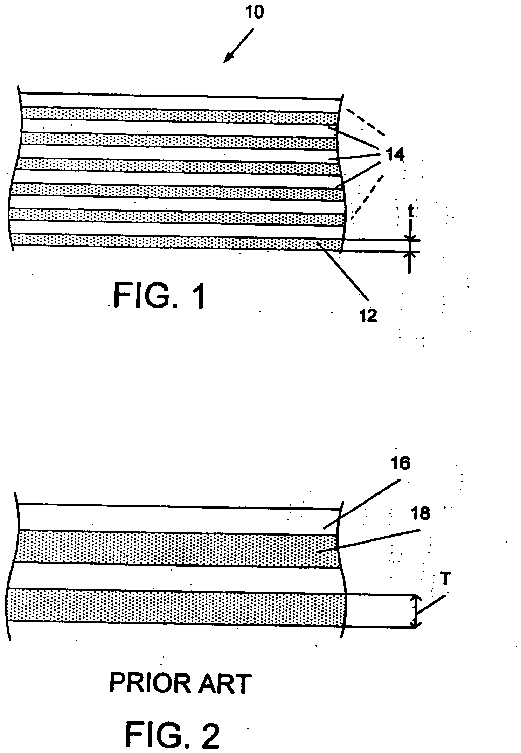

A cross section of a composite material 10 according to the present invention is shown in Fig. 1. The composite material 10 has a plurality of layers (plies) including first plies 12 indicated with dots, oriented in a first direction. The first plies 12 are separated by second plies 14 oriented in a second direction, different from the first direction. The,second plies 14 are indicated without any marks for the purpose of distinguishing them in Fig. 1 from the first plies 12. According to the present invention, the plies 12, 14 are of a thickness "t" from 0.02 mm to 0.06 mm. Fig. 2 is used to simply indicate that a conventional/prior art laminate is constructed of alternating plies such as 16, 18 that are thicker than the thickness of the present invention, each having a thickness "T" of generally 0.12 mm or more.

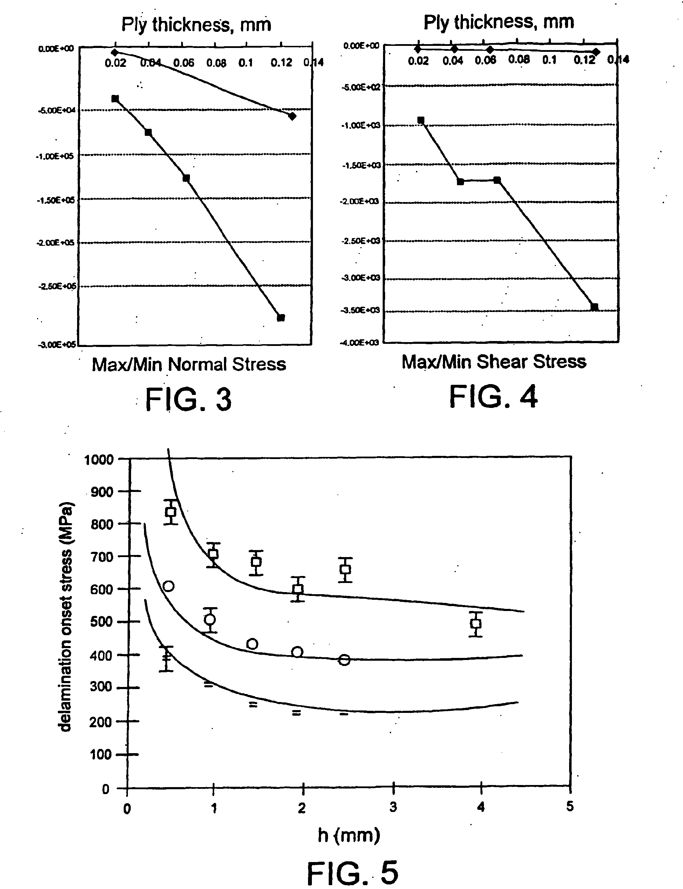

According to the present invention, thin ply laminates provide improved delamination resistance. They require no out-of-plane fibers and thereby maintain the superior in-plane properties. As an example, the calculated normal and shear stresses present at a free edge of a laminate are shown in Figs. 3 and 4, as functions of ply thickness. The conventional/prior art ply thickness of at least 0.12 mm is shown on the right of each figure, with decreasing play thicknesses to the left down to 0.02 mm. These measurements show a dramatic decrease in the normal and shear stresses as ply thickness decreases to 1/3 and 1/6 of the 0.12 mm prior art thick ply laminate. This is an unexpected result in view of the prior art. Thus, the thin ply laminates provide improved solutions for delamination resi5tance.

Another example of the effect of thin plies on the onset of delamination is illustrated in Fig. 5 which shows the stress required for delamination as a function of effective ply thickness. As ply thickness decreases, the delamination stress again dramatically increases.

As an alternate embodiment, hybrid combinations of thick and thin plies can provide a balance between performance and cost, and this combination is included in the present invention. Thin plies not only increase toughness, they also increase flexibility on ply drop. This is achieved by use of a sublaminate module, in which a module with thin plies having different orientations or a combination of thin and thick plies with different orientations are pre-formed as building blocks for laminates. Instead of dropping individual plies, sublaminate modules are dropped.

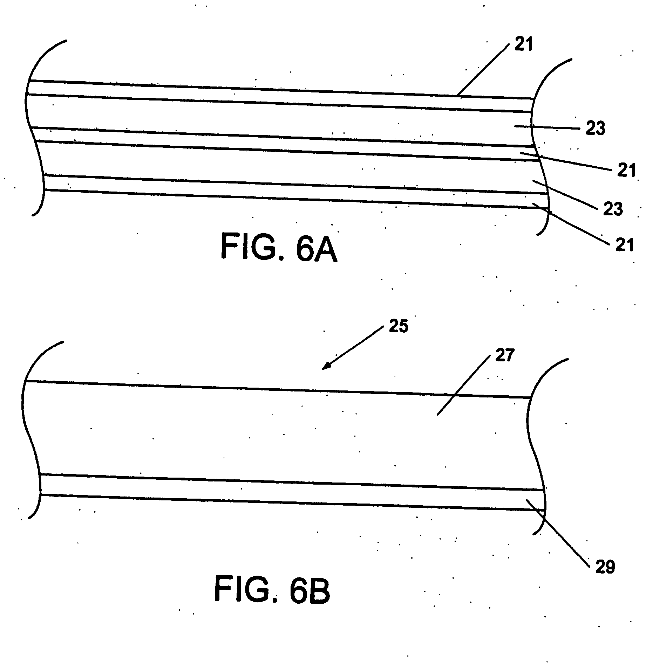

Example 1: An example according to the present invention includes a combination of thick ply with 0.12 mm thickness and thin ply with 0.02 mm thickness. This is illustrated in Fig. 6A with thin plies 21 and thick plies 23. Further, a sublaminate 25 as in Fig. 6B can be a thick-thin hybrid having one thick [0] ply 27 and one thin [90] ply 29. The total thickness of this sublaminate module could be 0.12 mm + 0.02 mm = 0.14 mm and the percentage of [0] in this case would be 0.12/0.14 = 86 percent. Using this sublaminate to build a mast or boom provides a highly anisotropic structure having a toughness not possible with conventional laminates using only thick plies. For the latter case, the repeating module of thick plies would have to be 9 plies of [0] and one ply of [90]. The total sublaminate thickness would be 1.20 mm with the percentage of [0] equal to 90 percent. This design has 9 plies of [0] stacked together, which is a poor design from the standpoint of toughness. This practice makes masts unstable and susceptible to failure by snapping.

Example 2: If a higher percentage of [0] is desired, it is possible to have two thick plies [0] following by one thin ply [90]. In this case the percentage of [0] would be 0.24/0.26 = 92 percent. A tri-directional sublaminate module having two [0] and one [+/-45] would have a percentage of [0] of 0.24/0.28 = 86 percent. Both these examples will give the mast or boom much tougher laminates. This hybrid structure is also useful for drive shafts, leaf springs, and sporting goods (e.g. pole vault shafts, hockey sticks, golf clubs, etc.).

Example 3: Another example of a thick-thin ply laminate is a tri-directional sublaminate having one thick 0.12 mm ply [0] and two thin 0.02 mm, angled-plies [+/-30] or [+/-45], such as a [+30/0/-30] or [+45/0/-45] module. The total sublaminate thickness is 0.16 mm, which can be accomplished as one step in a ply drop. Tri-directional modules of any combination of thick and thin plies can be produced. This design flexibility allows products with significantly improved laminate performance and significant cost savings in manufacturing.

Example 4: The same concept of multidirectional subliminates can be designed for spars and ribs as substructures of a composite structure. In this case, shear modulus in the web is most important. A thick-thin hybrid may have thick [+/-45] combined with thin [0] In all these applications, the lay-up process of sublaminates can be in one direction, e.g. along the axis of the spar. In the case of a skin for wings, the lay-up can be along the wing axis. In the case of a fuselage, the lay-up may be in two directions, one along the hoop direction and the other along the axial direction, or along two helical angles. Very significant savings in lay-up machine capability and lay-up time and labor can be realized.

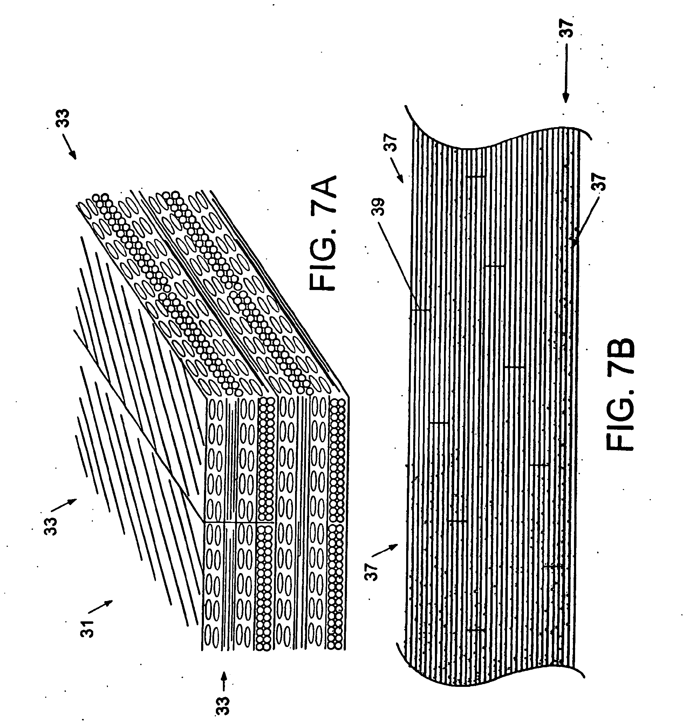

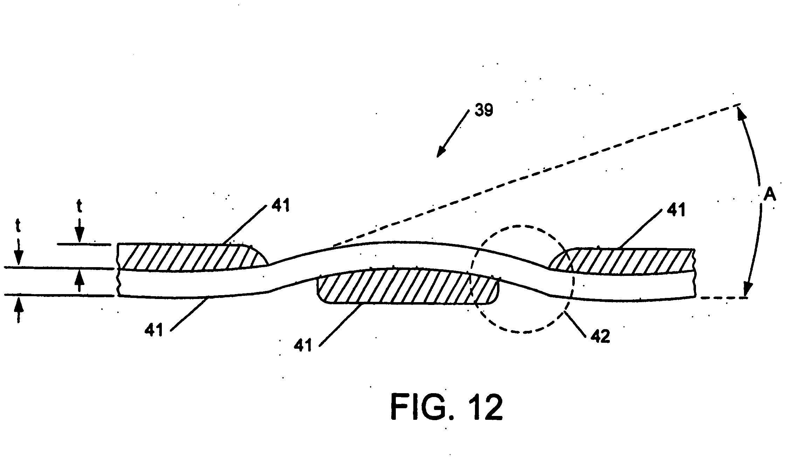

A composite material according to the present invention can be constructed with a plurality of sublaminate modules. Fig. 7A illustrates a composite material 31 including sublaminate modules 33. Fig. 7B is a planar side view of a composite material 35 with sublaminates 37, similar to Fig. 7A for illustrating sublaminate joints 39. Sublaminate sheets are jointed in the direction of width and the sheets are stacked up without repeating the joint part in the direction of the thickness. The sublaminates of Figs. 7A, 7B can all be the same, or they can be different. A sublaminate can have all thin plies, or a combination of thin and thick plies, and/or the sublaminate can have plies of interlaced fabric as illustrated in Fig. 12. Use of thin ply permits sublaminate thickness of approximately the same as a conventional ply thickness. Using this method, large-scale composite molding of products with superior mechanical properties is obtained.

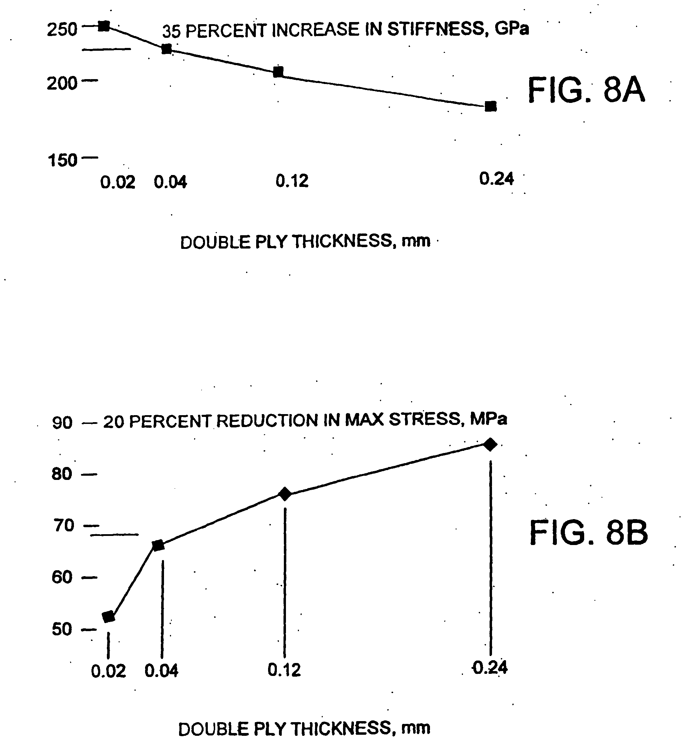

One method of forming thin ply tows is by spreading conventional tows. The cross-section of the spread tows is rectangular with thickness of 0.04 mm or less and width on the order of 20 mm. These spread tows can be easily interlaced to form a woven fabric. A cross section of interlacing tows is shown in Fig. 12. Interlaced fabric offers high performance laminates which easily conform to complex tooling geometries. The total thickness of such an interlaced fabric will be twice that of the thin ply thickness; i.e. 0.04 mm thick if 0.02 mm thin ply is used. The structural performance of an interlaced fabric with thick and thin plies is shown in Figs. 8A and 8B, with increasing mechanical properties shown as ply thickness decreases from right to left. There is a 35% increase in stiffness and a 20% reduction in maximum stress when 0.02 mm plies are used instead of 0.12 mm plies.

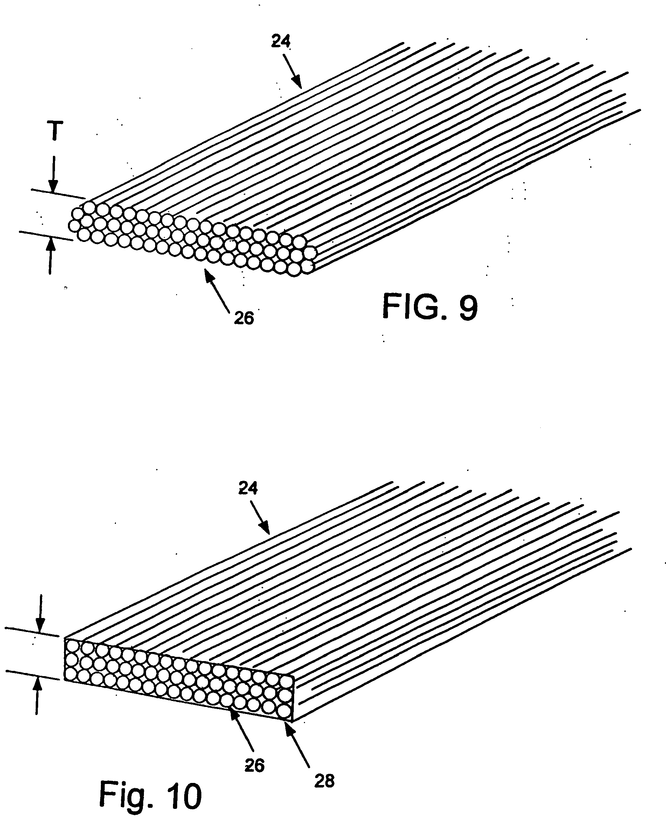

Thin ply 24 may be (a) dry fibers 26 (i.e. without resin impregnation) as shown in Fig. 9 with a thickness of less than 0.06 mm, or (b) fibers 26 in a resin impregnated (prepreg) sheet 28 of less than 0.06 mm (Fig. 10).

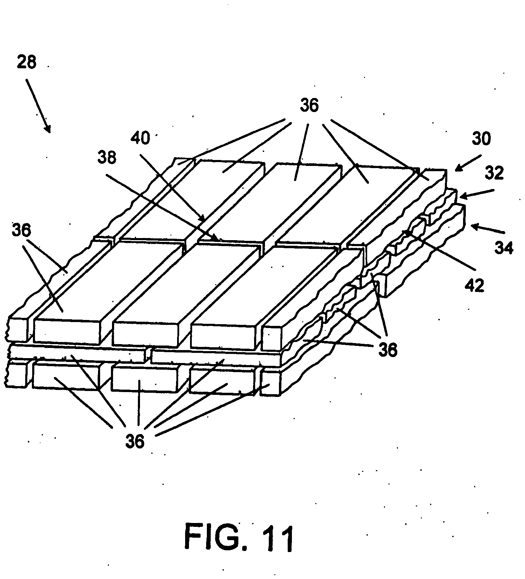

'As an example, laminate 28 is shown in Fig. 11, with three layers 30, 32, 34 formed with a plurality of plies 36. Plies can be located close to ends 38 and along a side as at 40, and where layers meet 42. There may be gaps in between. These gaps only slightly affect the mechanical properties of the laminate because the ply thickness is very small.

Fig. 12 is a cross section of interlaced plies 41. Thin ply laminates have improved properties because the size of the crimp interchange area 42 and resulting angle A shown in Fig. 12 becomes smaller as ply thickness decreases. The affected area of the crimp when the spread tows weave their way up and down as they meet the orthogonally oriented tows is smaller with thinner tows. The interchanging tows must accommodate one another's thickness. The thinner the tows, the less accommodation is required at the tow interchange. Thus, the macroscopic stiffness of the interlaced tows and the resulting stress at the interchange are affected by this thickness. The thinner the tows, the higher will be the stiffness and lower local stress.

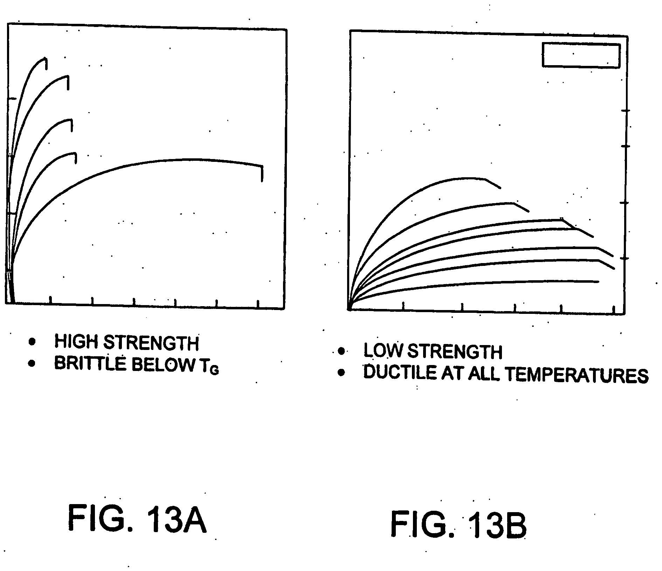

Bonded joints provide the best method of joining two composite components. Bonded joints are easier to produce and induce minimum stress concentrations at joints. Broadly speaking, there are two types of bonded joint adhesive: brittle and ductile adhesives. Figs. 13A and 13B show load-deformation curves of a brittle adhesive and a ductile adhesive at various temperatures, respectively. The stiffest adhesive load-deformation curve is the room temperature behavior. As temperature increases, the adhesive will behave more and more like a ductile material. The brittle adhesive in Fig. 13A is a glass powder reinforced epoxy; the ductile adhesive is PMMA.

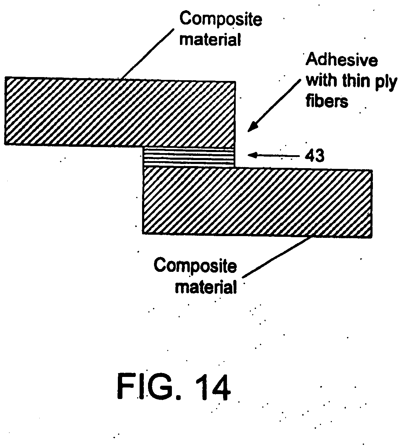

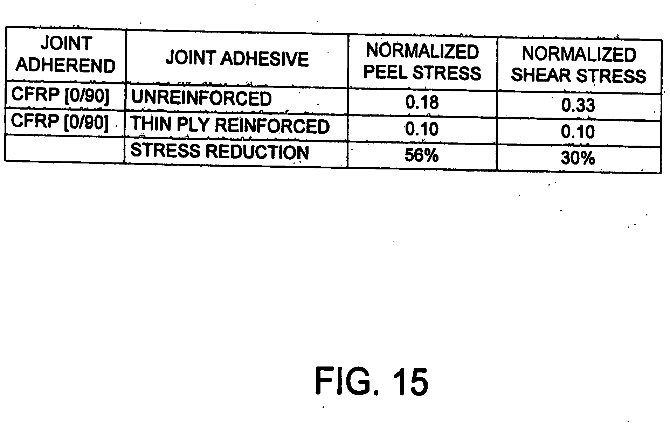

A new bonded joint 43 can be produced using thin ply as a reinforcement, as shown in Fig. 14. The effectiveness of such a joint is shown in the table of Fig. 15, which shows predictions from a finite element analysis. Note the stress reduction to 56% and 30% of the stress for unreinforced adhesive. In addition, this joint design achieves a balance between the peel and shear stresses, not having one dominate the other as is the case of unreinforced adhesive. For thin ply reinforced adhesive, the [0] orientation is aligned with the axial force applied to the bonded joint:

Sheet molding compounds and mats can be produced using chopped thin ply fibers. These products have higher performance because the loss of stiffness and strength due to crimp interchange is reduced. In addition, thinner plies reduce bending stiffness by a cubic relation; i.e. 1/6 of thick ply thickness will have 1/216 the original stiffness. Thus a sheet molding compound made of chopped thin ply tows will more easily conform to the abrupt changes in curvature and shape in a molded part. This processing advantage is in addition to the improved stiffness and strength.

Online consolidation of carbon reinforced thermoplastic tape also benefits from thin plies in quality and process speed. The usual boardiness (high stiffness) of thick ply tapes can be significantly reduced to more pliable or compliant tape when the tape thickness is smaller. The same cubic relation discussed above also applies to tape flexural rigidity. In online processing using thin tapes, preheating for the sole purpose of making the tape more pliable is not necessary. This process can be used to make pressure vessels by filament winding followed by curing.

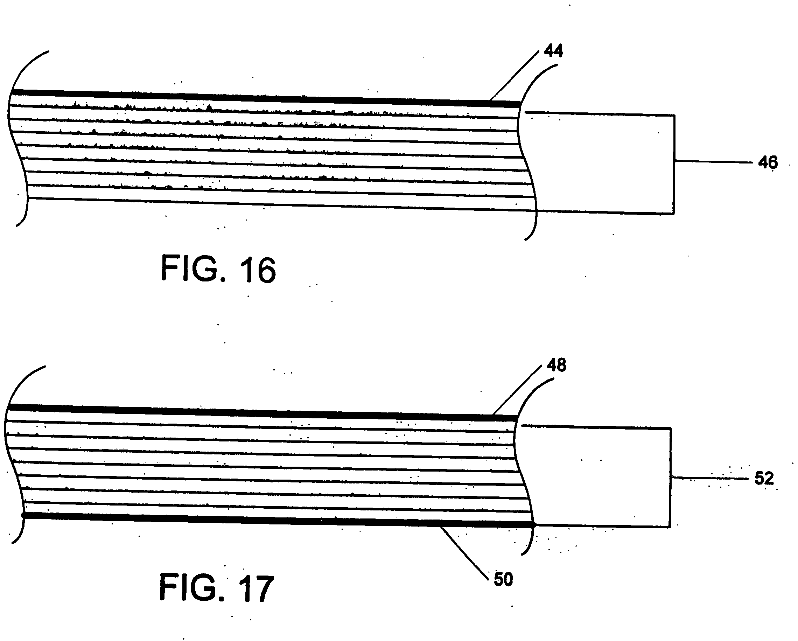

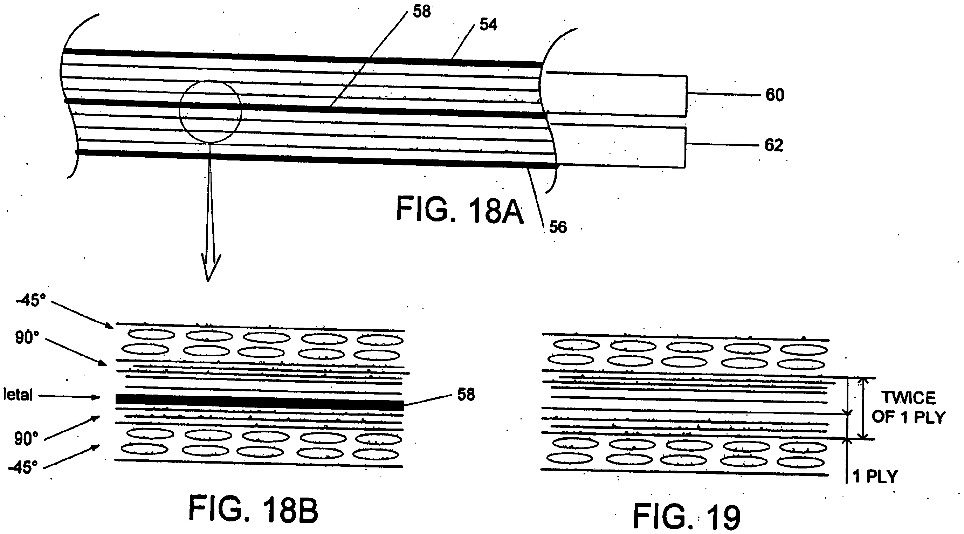

Figs. 16-18 illustrate other embodiments of the laminate of the present invention including metal and thin ply laminate. Fig. 16 shows metal 44 applied to one side of thin ply laminate 46. Fig. 17 shows metal 48, 50 on both sides of thin ply laminate 52. Figures 16 and 17 illustrate products on which a metal matrix composite is bonded to one or both sides of a thin ply laminate. The metal layer can be created in a number of ways known in the art, including metal foil, vapor deposition (CVD), metal embedded in polymer, plating, etc. The metal protects the laminate. In an uncoated thin ply laminate, the surface ply is very thin. When an outside fiber in the laminate is damaged (e.g. by impact or scratch), fiber destruction in the surface ply can easily occur, which can lead to failure of the laminate. The products shown in Figs. 16 and 17 help prevent such fiber destruction and failure. Fig. 18A shows metal on both sides 54, 56 and in the center 58 of thin ply laminate 60, 62. Fig. 18B is a section from Fig. 18A for illustrating the orientation (90°, -45°) of the fibers in the laminate layers of Fig. 18A. When metal matrix composite is inserted in the center of thin ply laminates as shown in Figures 18A and 18B, double thickness in the laminate is prevented. This is helpful in symmetrical lamination, where double thickness at the center of the laminates can lead to matrix cracking and delamination. Fig. 19 illustrates double thickness of the center ply layers if no metal is present, which can create cracking and delamination susceptibility for the laminate.

A new family of metal matrix composites using metallic and thin ply composites that can be manufactured at reasonably low cost. For example, high temperature composite materials using thin carbon fiber reinforced plastics (CFRP) in conjunctions with titanium (Tigr: Titanium-graphite) or copper (Cugr: Copper-graphite) can be formed. Such metal matrix composites have both high temperature and unique corrosion resistance for many applications, including chemical piping and vessels.

For mats and interlaced fabrics, including resin transfer molding (RTM) and vacuum-assisted resin transfer molding (VARTM) processes, the use of thin ply materials makes material flow easier, and enhances conformation to complex surfaces while maintaining superior physical properties.

The embodiments described above are given as examples of the present invention. Those skilled in the art will be aware of variations to these examples.

## Claims

1. A composite material comprising at least a first layer of carbon fibre thin plies and a second adjacent layer of carbon fibre thin plies, the carbon fibre thin plies having a thickness from 0.02 to 0.06 mm, wherein the carbon fibre thin plies in the first layer are oriented in a first direction and the carbon fibre thin plies in the second layer are oriented in a second direction at an angle to the first direction
wherein the material includes a combination of conventional plies having a thickness of at least 0.12 mm, and thin plies having a thickness of from 0.02 to 0.06 mm.

2. The material of claim 1, wherein the material includes a combination of sublaminate modules of carbon thin plies.

3. The material of claim 2, wherein the material includes sublaminate modules of carbon thin plies and sublaminate modules of conventional plies.

4. The material of claim 2, wherein the material includes sublaminate modules having carbon thin plies and conventional plies.

5. The material of claim 1, claim 2, claim 3, claim 4, wherein the carbon thin plies are interlaced or woven.

6. The material of claim 1, claim 2, claim 3, claim 4, wherein the material is formed using resin transfer molding.

7. The material of claim 1, claim 2, claim 3, claim 4, wherein the carbon thin plies are combined with an adhesive to provide a reinforced bonding material for joining composites and/or metallic components with bonded joints.

8. The material of claim 1, claim 2, claim 3, claim 4, wherein the carbon thin plies are combined with an adhesive to provide a reinforced bonding material for composite components having honeycomb or sandwich construction.

9. A product including the material of claim 1, claim 2, claim 3, claim 4, wherein the carbon thin plies are incorporated into a thermosetting or thermoplastic tape, the product is formed by a tape placement method or a tape winding method, and the tape is cured.

10. A fiber-metal composite material comprising the material of claim 1, claim 2, claim 3, claim 4 and a metal sheet.

11. The composite material of claim 10, wherein the metal sheet is laid only as a surface layer.

12. The composite material of claim 10, wherein the metal sheet is laid between thin plies having the same fiber direction.

13. The matrix composite material of claim 10, wherein the metal is selected from the group consisting of titanium and copper.

## Patentansprüche

1. Verbundwerkstoff, umfassend zumindest eine erste Schicht aus dünnen Kohlefaser-Einzelschichten und eine zweite benachbarte Schicht aus dünnen Kohlefaser-Einzelschichten und wobei die dünnen Kohlefaser-Einzelschichten eine Dicke von 0,02 bis 0,06 mm aufweisen, bei dem die dünnen Kohlefaser-Einzelschichten in der ersten Schicht in einer ersten Richtung ausgerichtet sind und die dünnen Kohlefaser-Einzelschichten in der zweiten Schicht in einer zweiten Richtung quer zu der ersten Richtung ausgerichtet sind, bei dem der Werkstoff eine Kombination aus herkömmlichen Einzelschichten mit einer Dicke von zumindest 0,12 mm und dünnen Einzelschichten mit einer Dicke von zwischen 0,02 bis 0,06 mm einschließt.

2. Werkstoff nach Anspruch 1, bei dem der Werkstoff eine Kombination aus Sublaminat-Modulen aus dünnen Kohlenstoff-Einzelschichten einschließt.

3. Werkstoff nach Anspruch 2, bei dem der Werkstoff Sublaminat-Module aus dünnen Kohlenstoff-Einzelschichten und Sublaminat-Module aus herkömmlichen Einzelschichten einschließt.

4. Werkstoff nach Anspruch 2, bei dem der Werkstoff Sublaminat-Module mit dünnen Kohlenstoff-Einzelschichten und herkömmliche Einzelschichten einschließt.

5. Werkstoff nach Anspruch 1, Anspruch 2, Anspruch 3, Anspruch 4, bei dem die dünnen Kohlenstoff-Einzelschichten verkreuzt oder verwoben sind.

6. Werkstoff nach Anspruch 1, Anspruch 2, Anspruch 3, Anspruch 4, bei dem der Werkstoff nach dem Harzinjektions-RTM-Verfahren ausgebildet ist.

7. Werkstoff nach Anspruch 1, Anspruch 2, Anspruch 3, Anspruch 4, bei dem die dünnen Kohlenstoff-Einzelschichten mit einem Kleber verbunden sind, um ein verstärktes Klebematerial zum Verbinden von Verbundwerkstoffen und/oder metallischen Bauteilen mit Klebeverbindungen verfügbar zu machen.

8. Werkstoff nach Anspruch 1, Anspruch 2, Anspruch 3, Anspruch 4, bei dem die dünnen Kohlenstoff-Einzelschichten mit einem Kleber verbunden sind, um ein verstärktes Klebematerial für Verbundbauteile in Waben- oder Verbund-Bauweise verfügbar zu machen.

9. Erzeugnis, das den Werkstoff nach Anspruch 1, Anspruch 2, Anspruch 3, Anspruch 4 einschließt, bei dem die dünnen Kohlenstoff-Einzelschichten in einem Band aus Duroplasten oder Thermoplasten eingebunden sind, das Erzeugnis durch ein Bandlegeverfahren oder ein Bandwickelverfahren ausgebildet ist und das Band ausgehärtet ist.

10. Metallfaser-Verbundwerkstoff umfassend den Werkstoff nach Anspruch 1, Anspruch 2, Anspruch 3, Anspruch 4 und ein Blech.

11. Verbundwerkstoff nach Anspruch 10, bei dem das Blech lediglich als Oberflächenschicht ausgelegt ist.

12. Verbundwerkstoff nach Anspruch 10, bei dem das Blech zwischen dünnen Einzelschichten mit derselben Faserrichtung ausgelegt ist.

13. Matrix-Verbundwerkstoff nach Anspruch 10, bei dem das Metall aus der Gruppe, die Titan und Kupfer umfasst, ausgewählt ist.

## Revendications

1. Matériau composite comprenant au moins une première couche de plis minces en fibre de carbone et une seconde couche adjacente de plis minces en fibre de carbone, les plis minces en fibre de carbone ayant une épaisseur de 0,02 mm à 0,06 mm, dans lequel les plis minces en fibre de carbone dans la première couche sont orientés dans une première direction et les plis minces en fibre de carbone dans la deuxième couche sont orientés dans une deuxième direction formant un angle avec la première direction,
dans lequel le matériau comprend une combinaison de plis classiques ayant une épaisseur d'au moins 0,12 mm et de plis minces ayant une épaisseur de 0,02 mm à 0,06 mm.

2. Matériau selon la revendication 1, dans lequel le matériau comprend une combinaison de modules sous-laminés de plis minces de carbone.

3. Matériau selon la revendication 2, dans lequel le matériau comprend des modules sous-laminés de plis minces en carbone et des modules sous-laminés de plis classiques.

4. Matériau selon la revendication 2, dans lequel le matériau comprend des modules sous-laminés comportant des plis minces de carbone et des plis classiques.

5. Matériau selon la revendication 1, la revendication 2, la revendication 3, la revendication 4, dans lequel les plis minces de carbone sont tressés ou tissés.

6. Matériau selon la revendication 1, la revendication 2, la revendication 3, la revendication 4, dans lequel le matériau est formé par moulage par transfert de résine.

7. Matériau selon la revendication 1, la revendication 2, la revendication 3, la revendication 4, dans lequel les plis minces de carbone sont combinés à un adhésif pour donner un liant renforcé destiné à lier des composites et/ou des composants métalliques avec des joints collés.

8. Matériau selon la revendication 1, la revendication 2, la revendication 3, la revendication 4, dans lequel les plis minces de carbone sont combinés à un adhésif pour donner un liant renforcé pour composants composites présentant une construction en nid d'abeille ou sandwich.

9. Produit comprenant le matériau selon la revendication 1, la revendication 2, la revendication 3, la revendication 4, dans lequel les plis minces de carbone sont incorporés dans une bande thermodurcissable ou thermoplastique, le produit est formé selon un procédé de placement de bande ou un procédé d'enroulement de bande, et la bande est durcie.

10. Matériau composite fibre-métal comprenant le matériau selon la revendication 1, la revendication 2, la revendication 3, la revendication 4, et une feuille métallique.

11. Matériau composite selon la revendication 10, dans lequel la feuille métallique est uniquement placée en tant que couche de surface.

12. Matériau composite selon la revendication 10, dans lequel la feuille métallique est placée entre des plis minces ayant la même direction de fibre.

13. Matériau composite de matrice selon la revendication 10, dans lequel le métal est choisi dans le groupe constitué du titane et du cuivre.
